# EUROPEAN PATENT SPECIFICATION

(11) **EP 0 605 374 B1**
(45) Date of publication and mention of the grant of the patent: **14.05.1997**
(21) Application number: 93850236.6
(22) Date of filing: 16.12.1993
(51) Int. Cl.: F23D 3/04, F24C 5/02, A47J 36/26

(54) **Device for a burner preferably for a spirit stove**
Vorrichtung für einen Brenner, insbesondere für einen Spiritusofen
Dispositif pour un brûleur, particulièrement pour un réchaud à alcool

(30) Priority: 29.12.1992 SE 9203924
(43) Date of publication of application: 06.07.1994
(73) Proprietor: AKTIEBOLAGET ELECTROLUX, 105 45 Stockholm (SE)
(72) Inventor: Arvidsson, Thomas, S-341 39 Ljungby (SE)
(74) Representative: Erixon, Bo

(56) References cited:
- WO-A-88/04533
- DE-A- 2 151 429
- GB-A- 388 335
- US-A- 4 984 559

## Description

This invention relates to a device for a burner for a spirit stove operating without pressure and comprising a fuel container with a mass absorbing the spirit, the container having an opening in which the absorbing mass is uncovered in order to form an evaporation surface for the spirit, the stove having a flame spreader which is placed above the opening and which comprises a mainly horizontal plate and a downwardly extending tube shaped part below which air during the combustion flows to the evaporation surface

Such spirit stoves are previously known and are usually also provided with a holder for cooking-utensiles. The flame spreader divides the flame into several minor flames thereby reducing the extension of the height of the flame which gives a more complete combustion and to some extent also reduces the risk for soot deposit on the cooking-utensiles. This type of spirit stove is shown for instance in US 4984559.

Even if the combustion efficency is acceptable at these stoves there is a desire to achieve a more complete combustion in order to reduce the the CO-content in the combustion gases.

The purpose of this invention is to increase the combustion efficiency for a spirit stove and this is achieved by means of a device having the caracteristics mentioned in the claims.

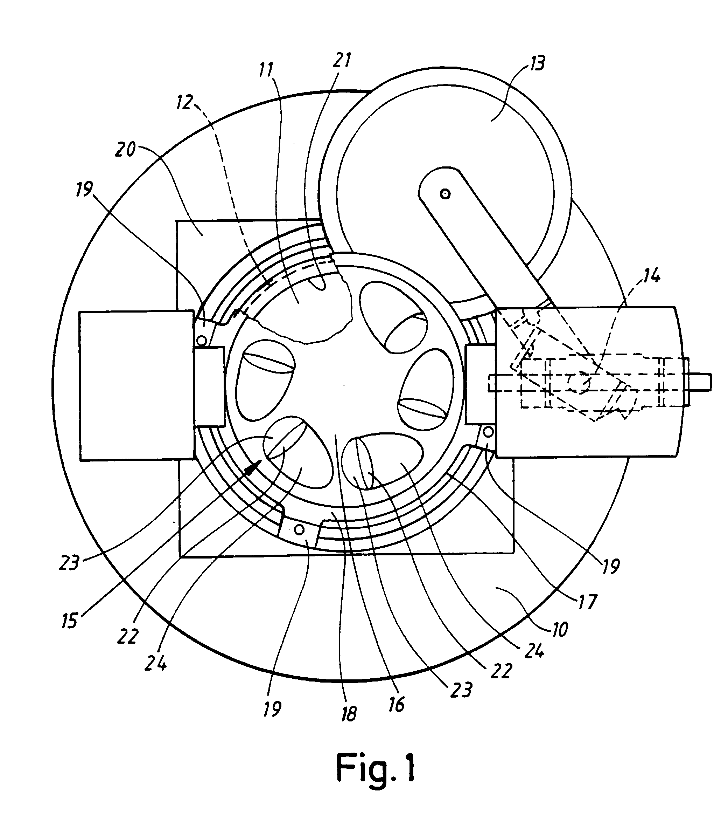

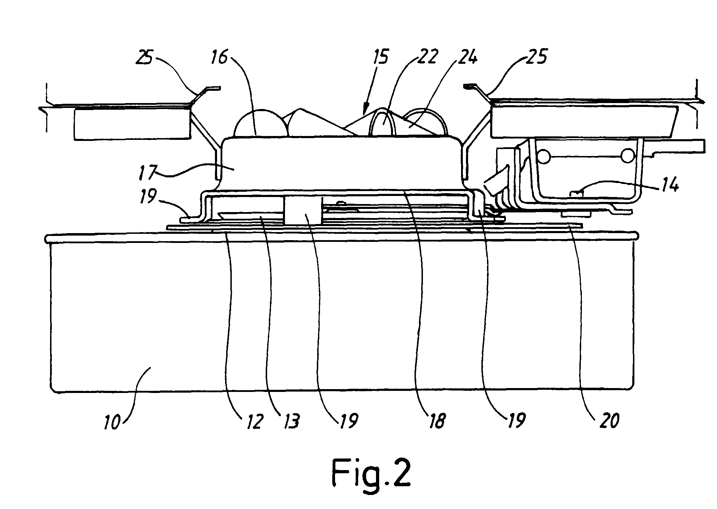

An embodiment of the invention will now be described with reference to the accompanying drawings in which fig. 1 is a partly broken horizontal view of a spirit stove with a device according to the invention whereas fig 2 is a side view of said device.

In the figures 10 is a circular container which contains a mass absorbing the spirit. At the top of the container there is a central circular opening 11 surrounded by a bead 12. In the opening a part of the absorbing mass is uncovered which part serves as a vaporizing surface for the spirit which can be set to fire and burn in this opening. The opening 11 can be partly or completely covered by means of a disc 13 in order to adjust or extinguish the flame. The disc 13 is in a manner which is not described in detail turnably supported on a vertical shaft 14.

Above the opening 11 there is a flame spreader 15 comprising an upper mainly horizontal plate 16 continuing into a cylinder shaped, downwardly extending part 17 the lower end of which has an outwardly extending flange 18 which is placed above and at a distance from the container 10 so that air can flow towards the opening 11 and the flame which is created below the flange 18. The flame spreader 15 is supported above the container 10 by means of several distance means 19 which are fixed to a plate 20 with a central opening 21 which is coaxial with the opening 11, the plate resting on the bead 12.

The upper horizontal plate 16 of the flame spreader has several oval openings 22 which are placed at the periphery of a circle. These openings are formed by giving a first part 23 of the plate a curvatured, downwardly bent form whereas a second part 24 is given an upwardly bent, curved form. Thus, several channels which are inclined upwards are formed and these channels create several minor flames which have a horizontal and a tangential direction component.

The flame spreader supports in a conventional way also a holder 25, not shown in detail, for cooking-utensiles.

By means of the abovementioned construction an arrangement is created which effectively mixes the air into the burning area thereby radically reducing the content of carbon monoxide in the combustion gases. Thus, experimental work has shown that the CO-content can be reduced with 90% compared to conventional arrangements.

According to our invention the combustion takes place in several minor flames, the flames being separated in such a way that oxygen can be supplied around the flames from all directions. At the same time the minor flames are so close to each other that this criteria is only just fulfilled. This means that the minor flames maintain their heat content during the combustion reaction which has a positive influence on the combustion gas emission which is reduced.

In order to get a more complete combustion the diffusion length, i.e. the distance which the surrounding oxygen has to flow in order to reach the center of each minor flame, should be minimized which is achieved by using a non-circular cross section of the minor flames created.Thus, according to the invention the flames preferably have an oval cross section in which the diffusion length is about half the length of flames having a circular cross section. The number of minor flames can of course be varied in any suitable way in order to achieve spirit stoves with given power and height.

The stay time also plays an important role during the combustion process. It is necessary to give the flames a maximum of combustion time before cooling takes place, which means that there is a wish for a long distance between the cooking utensiles and the burner. It is at the same time important to minimize the height of the spirit stove. In order to solve this contradiction the burner according to the invention is so designed that the flames achieve a horizontally directed component which extends the distance and hence the stay time for each minor flame whereas the height of the stove becomes minimal. According to one embodiment of the invention the design is such that the minor flames get a spiral shaped track thereby extending the distance without increasing the stove height.

It should be mentioned that the flame spreader shall be so shaped that what has been said above is fulfilled without giving the flame spreader a heat capacity which is unnecessary large. Thus when a spirit stove is set to fire a large amount of carbon monoxide instead of carbon dioxide is created under an initial stage because the flame is cooled by the adjacent cold surfaces. By using a flame spreader with a small heat capacity this period is shortened.

## Claims

1. Device for a spirit stove burner operating without pressure and comprising a fuel container (10) with a spirit absorbing mass, the container having an opening (11) in which the absorbing mass is uncovered in order to form an evaporation surface for the spirit, the stove having a flame spreader (15) which is placed above the opening and which comprises a mainly horizontal plate (16) and a downwardly extending tube shaped part (17) below which air during burning flows to the evaporation surface, the plate (16) having flame openings (22) which are so shaped that several minor flames are created **characterized in** that the planes of the flame openings (22) are obliquely or perpendicular to said horizontal plate (16) and to a radius for a circle with its center at the center of the tube shaped part (17) thereby giving the flames a horizontal direction component and, seen in a plane view, a tangential direction component with respect to said circle.

2. Device according to claim 1, **characterized in** that each opening is limited by a first part (23) which is bent downwardly with respect to the upper side (16) of the flame spreader and a second part (24) which is bent upwardly with respect to the upper side (16) of the flame spreader thereby creating channels slanting upwards for the minor flames.

3. Device according to any of the preceding claims, **characterized in** that the plate is circular and that the tube shaped part (17) is a downwardly directed cylinder.

4. Device according to claim 3, **characterized in** that the lower end of the tuber shaped part (17) is placed above and at a distance from the vaporization surface.

5. Device according to any of the preceding claims, **characterized in** that the openings (22) are so shaped that the minor flames achieve a non circular, preferably an oval, cross section.

6. Device according to any of the preceding claims, **characterized in** that the openings (22) are so shaped that the minor flames are separated from each other but in close vicinity of each other.

## Patentansprüche

1. Vorrichtung für einen Spiritusofenbrenner, der ohne Druck arbeitet und einen Brennstoffbehälter (10) mit einer den Spiritus absorbierenden Masse umfaßt, wobei der Behälter eine Öffnung (11) aufweist, in der die absorbierende Masse freigelegt ist, um eine Verdampfungsfläche für den Spiritus zu schaffen, wobei der Ofen einen Flammenteiler (15) aufweist, der über der Öffnung angeordnet ist und eine hauptsächlich waagerechte Platte (10) und ein sich nach unten erstreckendes, rohrförmiges Teil (17) aufweist, unter dem die Luft während des Brennens zu der Verdampfungsfläche strömt, wobei die Platte (16) Flammenöffnungen (22) aufweist, die derart gestaltet sind, daß mehrere kleinere Flammen erzeugt werden, **dadurch gekennzeichnet, daß** die Ebenen der Flammenöffnungen (22) zu der waagerechten Platte (16) und zu einem Radius für einen Kreis mit seinem Mittelpunkt im Mittelpunkt des rohrförmigen Teils (17) schräg oder lotrecht sind, wodurch die Flammen eine waagerechte Richtungskomponente und bei Betrachtung in Draufsicht mit Bezug auf den Kreis eine tangentiale Richtungskomponente erhalten.

2. Vorrichtung nach Anspruch 1, **dadurch gekennzeichnet, daß** jede Öffnung durch ein erstes Teil (23), das mit Bezug auf die obere Seite (16) des Flammenteilers nach unten gebogen ist, und ein zweites Teil begrenzt ist, das mit Bezug auf die obere Seite (16) des Flammenteilers nach oben gebogen ist, wodurch Kanäle für die kleineren Flammen geschaffen werden, die sich nach oben neigen.

3. Vorrichtung nach einem der vorhergehenden Ansprüche, **dadurch gekennzeichnet, daß** die Platte kreisförmig ist und daß das rohrförmige Teil (17) ein nach unten gerichteter Zylinder ist.

4. Vorrichtung nach Anspruch 3, **dadurch gekennzeichnet, daß** das untere Ende des rohrförmigen Teils (17) oberhalb der Verdampfungsfläche und in einer Entfernung von dieser angeordnet ist.

5. Vorrichtung nach einem der vorhergehenden Ansprüche, **dadurch gekennzeichnet, daß** die Öffnungen (22) so gestaltet sind, daß die kleineren Flammen einen nichtkreisförmigen, vorzugsweise ovalen Querschnitt haben.

6. Vorrichtung nach einem der vorhergehenden Ansprüche, **dadurch gekennzeichnet, daß** die Öffnungen (22) so gestaltet sind, daß die kleineren Flammen voneinander getrennt sind, aber sich in enger Nähe zueinander befinden.

## Revendications

1. Dispositif pour un brûleur de réchaud à alcool, fonctionnant sans pression et comprenant un réservoir à carburant (10) avec une masse absorbant l'alcool, le réservoir ayant une ouverture (11) dans laquelle la masse absorbante est laissé découverte dans le but de former une surface d'évaporation pour l'alcool, le réchaud ayant un répartiteur de flamme (15), qui est placé au-dessus de l'ouverture et qui comprend une plaque pratiquement horizontale (16) et une partie (17) en forme de tube s'étendant dessous vers le bas dont l'air pendant le brûlage s'écoule vers la surface d'évaporation, la plaque (16) ayant des orifices à flamme (22) qui sont formés de façon que plusieurs petites flammes soient créées, caractérisé en ce que les plans des orifices à flamme (22) sont orientés obliquement ou perpendiculaires à ladite plaque horizontale (16) et selon le rayon d'un cercle dont le centre se trouve au centre de la partie en forme de tube (17), de manière à donner une composante horizontale de direction au flammes et, vus en plan, une composante de direction tangentielle par rapport audit cercle.

2. Dispositif selon la revendication 1, caractérisé en ce que chaque orifice est limité par une première partie (23) qui est courbée vers le bas par rapport au côté supérieur (16) du répartiteur de flamme, et une deuxième partie (24) qui est courbée vers le haut par rapport au côté supérieur (16) du répartiteur de flamme afin de créer des canaux inclinés vers le haut pour les petites flammes.

3. Dispositif selon l'une quelconque des revendications précédentes, caractérisé en ce que la plaque est circulaire et que la partie en forme de tube (17) est un cylindre dirigé vers le bas.

4. Dispositif selon l'une quelconque des revendications précédentes, caractérisé en ce que l'extrémité inférieure de la partie en forme de tube (17) est placée au-dessus et à une distance de la surface d'évaporation.

5. Dispositif selon l'une quelconque des revendications précédentes, caractérisé en ce que les orifices (22) sont formés de façon que les petites flammes atteignent une section transversale non circulaire, de préférence ovale.

6. Dispositif selon l'une quelconque des revendications précédentes, caractérisé en ce que les orifices (22) sont formés de manière que les petites flammes soient séparées l'une de l'autre mais à proximité étroite l'une de l'autre.
